# EUROPEAN PATENT APPLICATION

(11) **EP 4 618 216 A1**
(43) Date of publication of application: **17.09.2025**
(21) Application number: 23915233.3
(22) Date of filing: 09.01.2023
(51) Int. Cl.: H01M 10/0525, H01M 4/13

(54) **LITHIUM-ION BATTERY AND ELECTRICAL APPARATUS**

(71) Applicant: Contemporary Amperex Technology (Hong Kong) Limited, Hong Kong (HK)
(72) Inventor: FAN, Peng, Ningde, Fujian 352100 (CN); HAN, Changlong, Ningde, Fujian 352100 (CN); ZHANG, Cuiping, Ningde, Fujian 352100 (CN); HUANG, Junyuan, Ningde, Fujian 352100 (CN); ZHANG, Zhe, Ningde, Fujian 352100 (CN)
(74) Representative: Gong, Jinping
(86) International application number: PCT/CN2023/071193
(87) International publication number: WO 2024/148449

(57) **Abstract**

This application discloses a lithium-ion battery and an electric apparatus. The lithium-ion battery includes: a positive electrode plate, a negative electrode plate, a separator, and an electrolyte. The separator is located between the positive electrode plate and the negative electrode plate. When the lithium-ion battery is charged at 1C to a state of charge of 80% SOC, a potential P_{anode} of the negative electrode satisfies: 0.09 V (vs. Li⁺/Li) < P_{anode} < 0.15 V (vs. Li⁺/Li).

## Description

### TECHNICAL FIELD

This disclosure relates to the field of new energy, and specifically, to a lithium-ion battery and an electric apparatus.

### BACKGROUND

Lithium-ion batteries, with the characteristics of light weight, small size, high density and long service life, are widely used in the fields such as electric vehicles, 3C digitals, energy storage devices. With the popularization and application of lithium-ion batteries, increasingly high requirements are imposed on input properties and output properties of lithium-ion batteries. However, higher input properties may lead to lithium precipitation in lithium-ion batteries. Lithium precipitation not only significantly shortens the service life of lithium-ion batteries, and may even bring serious safety problems. How to improve the input properties of lithium-ion batteries and simultaneously reduce the risk of lithium precipitation in batteries has become very important.

Therefore, the present lithium-ion batteries and electric apparatuses still need to be improved.

### SUMMARY

This application is made based on discovery and understanding of the following facts and issues of the inventors.

The inventors have found that when a lithium-ion battery operates with high input properties, a charging current is large, causing a potential of a negative electrode to drop rapidly. When the potential of the negative electrode of the lithium-ion battery drops below 0 V (vs. Li⁺/Li), lithium precipitation occurs on a surface of the negative electrode, causing significant deterioration of the service life and safety of the lithium-ion battery.

According to an aspect, this application proposes a lithium-ion battery. The lithium-ion battery includes: a positive electrode plate, a negative electrode plate, a separator, and an electrolyte. The separator is located between the positive electrode plate and the negative electrode plate. When the lithium-ion battery is charged at 1C to a state of charge of 80% SOC, a potential P_{anode} of the negative electrode satisfies: 0.09 V (vs. Li⁺/Li) < P_{anode} < 0.15 V (vs. Li⁺/Li). This can reduce the risk of lithium precipitation during charging of the lithium-ion battery.

According to embodiments of this application, when the lithium-ion battery is charged at 1C to a state of charge of 80% SOC, a potential P_{anode} of the negative electrode satisfies: 0.09 V (vs. Li⁺/Li) < P_{anode} < 0.13 V (vs. Li⁺/Li). This can further reduce the risk of lithium precipitation during charging of the lithium-ion battery.

According to the embodiments of this application, a CB value of the lithium-ion battery is 1.1 to 1.8, preferably, the CB value of the lithium-ion battery is 1.3 to 1.5, where CB represents negative electrode capacity/positive electrode capacity under same facing area. The positive electrode capacity and the negative electrode capacity can be measured by first assembling a positive electrode plate and a negative electrode plate having a same area with a lithium sheet to form a button battery and then using a Land tester to test a charge capacity. The CB value may be calculated according to the following formula based on design information of the battery: CB = negative electrode capacity per area/positive electrode capacity per area, where negative electrode capacity per area = coating weight per area of negative electrode plate (CW_{anode}) × gram capacity of negative electrode active material (gram capacity_{anode}) × percentage of negative electrode active material in coating of negative electrode plate (Loading_{anode}), and positive electrode capacity per area = coating weight per area of positive electrode plate (CW_{cathode}) × gram capacity of positive electrode active material (gram capacity_{cathode}) × percentage of positive electrode active material in coating of positive electrode plate (Loading_{cathode}), where the coating on the surface of the positive electrode plate is the positive electrode active material layer, and the coating on the surface of the negative electrode plate is the negative electrode active material layer. This can improve the stability of the lithium-ion battery under high-input/output characteristics.

According to the embodiments of this application, the electrolyte includes a first lithium salt, the first lithium salt is lithium bis(fluorosulfonyl)imide, and a mass percentage of the first lithium salt in the electrolyte is 5wt% to 19wt%. This can improve a lithium precipitation window during charging of the lithium-ion battery.

According to the embodiments of this application, the electrolyte further includes a second lithium salt, and the second lithium salt includes at least one of lithium hexafluorophosphate, lithium tetrafluoroborate, and lithium bis(difluorophosphonyl)imide. This can prolong the service life of the lithium-ion battery.

According to the embodiments of this application, a total mass percentage of the first lithium salt and the second lithium salt in the electrolyte is not greater than 30wt%. This enables the lithium-ion battery to have high energy density and low manufacturing costs.

According to the embodiments of this application, a molar concentration ratio of the first lithium salt to the second lithium salt in the electrolyte is (3:7) to (9:1). This can further improve the cycling performance and service life of the lithium-ion battery.

According to the embodiments of this application, the positive electrode plate includes a positive electrode active material layer, the positive electrode active material layer includes a positive electrode active material, and the positive electrode active material includes at least one of lithium cobaltate, lithium manganate, lithium nickel cobalt manganate, lithium nickel cobalt aluminate, lithium manganese phosphate, lithium iron phosphate, and lithium-rich manganese-based solid solution. This can satisfy the use of various positive electrodes.

According to the embodiments of this application, the positive electrode active material layer further includes a conductive agent, and a mass percentage of the conductive agent in the positive electrode active material layer is 0.5wt% to 6wt%. This can improve the conductivity of the positive electrode.

According to the embodiments of this application, the negative electrode plate includes a negative electrode active material layer, the negative electrode active material layer includes a negative electrode active material, and the negative electrode active material includes at least one of graphite, soft carbon, hard carbon, carbon fiber, mesophase carbon microbeads, silicon-based materials, and tin-based materials. This can satisfy the use of various negative electrodes.

According to the embodiments of this application, a solvent in the electrolyte includes at least one of cyclic carbonate, linear carbonate, and linear carboxylate. This can increase the solubility of the lithium salts and the conductivity of the electrolyte.

According to the embodiments of this application, the electrolyte further includes an additive, the additive includes at least one of fluoroethylene carbonate, cyclic sulfate, cyclic sulfonate, (trimethylsilyl) phosphate, (trimethylsilyl) borate, trimethylfluorosilane, lithium difluorophosphate, and lithium difluoro(oxalato)phosphate, and a mass percentage of the additive in the electrolyte is not less than 10 ppm. This can prolong the service life of the battery.

According to another aspect, this application provides an electric apparatus, where the electric apparatus includes the foregoing lithium-ion battery. Therefore, the electric apparatus has all the features and advantages of the foregoing lithium-ion battery, which are not described herein again.

### BRIEF DESCRIPTION OF DRAWINGS

The above and/or additional aspects and advantages of this application will become obvious and easy to understand from the description of the embodiments with reference to the following accompanying drawings, where
FIG. 1 is a schematic structural diagram of a lithium-ion battery according to an embodiment of this application;
FIG. 2 is a schematic structural diagram of an electric apparatus according to an embodiment of this application;
FIG. 3 is a diagram of a negative electrode plate whose lithium precipitation level is no lithium precipitation according to an embodiment of this application;

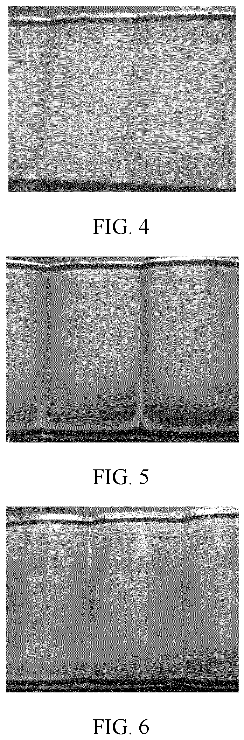

FIG. 4 is a diagram of a negative electrode plate whose lithium precipitation level is + according to an embodiment of this application;
FIG. 5 is a diagram of a negative electrode plate whose lithium precipitation level is ++ according to an embodiment of this application;
FIG. 6 is a diagram of a negative electrode plate whose lithium precipitation level is +++ according to an embodiment of this application;

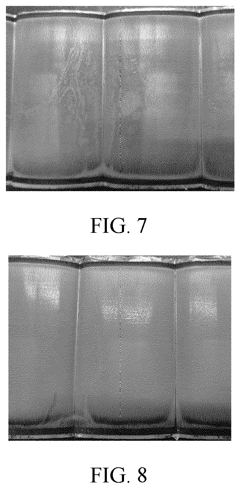

FIG. 7 is a diagram of a negative electrode plate whose lithium precipitation level is ++++ according to an embodiment of this application; and
FIG. 8 is a diagram of a negative electrode plate whose lithium precipitation level is +++++ according to an embodiment of this application.

Description of reference signs:
11. positive electrode current collector; 12. positive electrode active material layer; 21. negative electrode current collector; 22. negative electrode active material layer; 30. separator; and 40. electrolyte.

### DESCRIPTION OF EMBODIMENTS

The embodiments of this application are described in detail below. Examples of the embodiments are shown in the accompanying drawings, and reference signs that are the same or similar always indicate the same or similar components or components with the same or similar functions. The embodiments described below with reference to the accompanying drawings are illustrative and merely for explaining this application, and cannot be construed as any limitation on this application.

In the description of this application, "100% SOC" refers to a state obtained after the battery is charged to a maximum design voltage at a constant current of 1C and then charged to 0.05C at a constant voltage, where a state after standing (generally standing for 10 min) is also regarded as the 100% SOC state, that is, a fully charged state. "80% SOC" refers to a state obtained after an electrochemical apparatus is charged to 80% state of charge at a constant current. The battery can be adjusted to 80% SOC according to the following method: first, fully charging the battery and then discharging the battery at a constant current of 1C for 12 min, where the battery is at 80% SOC at that point, including a state after standing (generally standing for 10 min).

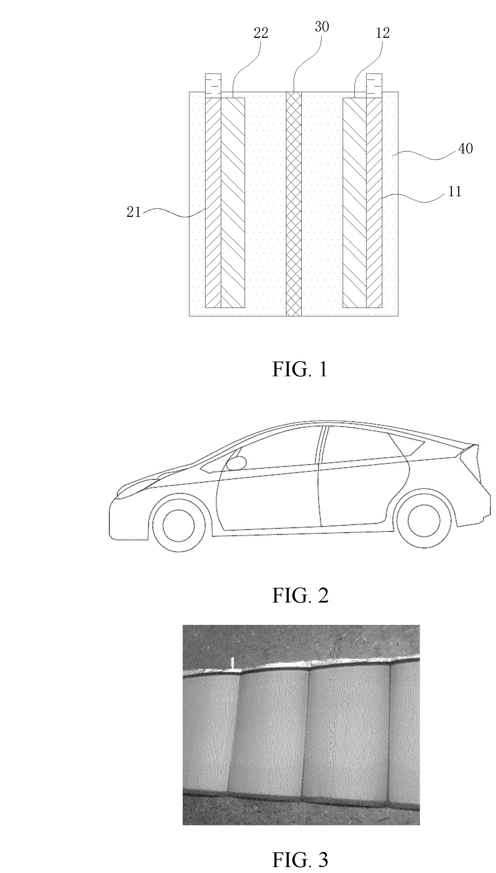

According to an aspect, this application proposes a lithium-ion battery. Referring to FIG. 1, the lithium-ion battery includes a positive electrode plate, where the positive electrode plate may include a positive electrode current collector 11 and a positive electrode active material layer 12 that is located on at least one side surface of the positive electrode current collector 11; a negative electrode plate, where the negative electrode plate may include a negative electrode current collector 21 and a negative electrode active material layer 22 that is located on at least one side surface of the negative electrode current collector 21; a separator 30; and an electrolyte 40. The separator 30 is located between the positive electrode plate and the negative electrode plate. When the lithium-ion battery is charged at 1C to a state of charge of 80% SOC, a potential P_{anode} of the negative electrode satisfies: 0.09 V (vs. Li⁺/Li) < P_{anode} < 0.15 V (vs. Li⁺/Li). When the lithium-ion battery operates with high input properties, for example, when the lithium-ion battery is charged at 3C, 5C or a larger charging rate, since the charging current is large, the potential of the negative electrode drops rapidly; when the potential of the negative electrode of the lithium-ion battery drops below 0 V (vs. Li⁺/Li), Li⁺ that cannot be intercalated into the negative electrode can only gain electrons on the surface of the negative electrode, forming silver-white metallic elemental lithium. Lithium precipitation not only significantly reduces battery performance and greatly shortens the cycle life but also may lead to short circuits, causing severe consequences such as battery fires and explosions. In this application, the inventors have found that when the lithium-ion battery is charged at rate of 1C to 80% SOC (State of Charge, state of charge of the battery, also called remaining capacity), if the potential P_{anode} of the negative electrode satisfies 0.09 V (vs. Li⁺/Li) < P_{anode} < 0.15 V (vs. Li⁺/Li), the potential of the negative electrode is higher than a potential platform where lithium precipitation is likely to occur under this state, thereby significantly improving the lithium precipitation window of the battery, reducing the risk of lithium precipitation during large-rate charging, and increasing a capacity retention rate during large-power charging and discharging.

According to some embodiments of this application, to further improve the charging efficiency of the battery, when the lithium-ion battery is charged at 1C to a state of charge of 80% SOC, the potential P_{anode} of the negative electrode may satisfy: 0.09 V (vs. Li⁺/Li) < P_{anode} < 0.13 V (vs. Li⁺/Li), thereby further reducing the risk of lithium precipitation during charging of the lithium-ion battery while increasing a charging speed.

According to some embodiments of this application, the CB value of the lithium-ion battery is not particularly limited. For example, the CB value of the lithium-ion battery may be 1.1 to 1.8, where CB = negative electrode capacity/positive electrode capacity under same facing area. The positive electrode capacity and the negative electrode capacity can be measured by first assembling a positive electrode plate and a negative electrode plate having a same area with a lithium sheet to form a button battery and then using a Land tester to test a charge capacity. The CB value may be calculated according to the following formula based on design information of the battery: CB = negative electrode capacity per area/positive electrode capacity per area, where negative electrode capacity per area = coating weight per area of negative electrode plate (CW_{anode}) × gram capacity of negative electrode active material (gram capacity_{anode}) × percentage of negative electrode active material in coating of negative electrode plate (Loading_{anode}), and positive electrode capacity per area = coating weight per area of positive electrode plate (CW_{cathode}) × gram capacity of positive electrode active material (gram capacity_{cathode}) × percentage of positive electrode active material in coating of positive electrode plate (Loading_{cathode}), where the coating on the surface of the positive electrode plate is the positive electrode active material layer, and the coating on the surface of the negative electrode plate is the negative electrode active material layer. The CB value being within the above range helps to control the potential P_{anode} of the negative electrode of the lithium-ion battery charged to a state of charge of 80% SOC at 1C between 0.09 V (vs. Li⁺/Li) and 0.15 V (vs. Li⁺/Li), effectively reducing lithium precipitation during large-rate charging of the lithium-ion battery, thereby enabling the lithium-ion battery to have both high energy density and high charging power density, and implementing large-rate charge and discharge.

According to some embodiments of this application, the positive electrode capacity per area and the negative electrode capacity per area in the CB calculation may be determined according to the following testing method.

First, a button battery is prepared: a positive electrode plate or a negative electrode plate is cut into a disc with a diameter of Φ=14 mm as an operating electrode, a lithium sheet with a diameter of Φ=18 mm as a counter electrode, the two are separated with a polyethylene (PE) separator with a diameter of Φ=20 mm therebetween, and an appropriate amount of electrolyte is added, followed by assembly to obtain a button battery.

Second, a capacity of an electrode plate is tested, the assembled button batteries with normal open-circuit voltage are taken for capacity testing, with at least 4 parallel samples per group. A capacity test process of the positive electrode plate: a voltage window for charging and discharging the button battery is set at 2.8 V to an upper limit voltage (maximum design voltage); and the button battery is first left standing for 5 min, charged at a constant current of 0.1C to the upper limit voltage, charged at a constant voltage to 50 µA, left standing for 5 min, and discharged at a constant current of 0.1C to 2.8 V, and this process is repeated for 3 cycles, where a discharge capacity at the third cycle is the capacity of the positive electrode plate. A capacity test process of the negative electrode plate: a voltage window for charging and discharging the button battery is set at 2 V to 0.005 V; and the button battery is first left standing for 5 min, discharged at a constant current of 0.05C to 0.005 V, discharged at a constant current of 50 µA to 0.005 V, left standing for 5 min, then discharged at a constant current of 10 µA to 0.005 V, left standing for 5 min, and then charged at a constant current of 0.1 C to 2 V, and this process is repeated for 3 cycles, where a charge capacity at the third cycle is the capacity of the negative electrode plate. The button battery data in which the curves are normal and the parallel samples have good consistency in the above capacity tests are selected.

Ultimately, Loading_{cathode} and Loading_{anode} are mass percentages of the positive electrode active material or negative electrode active material in the coating of the positive electrode plate or negative electrode plate determined during the design of the electrode plate. CW_{cathode} and CW_{anode} can be determined as follows: after the positive electrode plate and the negative electrode plate are coated and dried, the flat positive electrode plate and negative electrode plate are respectively punched to form small discs (for example, with an area of 1540.25 mm²), and then a weight of the positive electrode active material layer (weight of small electrode plate disc - weight of uncoated aluminum foil) and a weight of the negative electrode active material layer (weight of small electrode plate disc - weight of uncoated aluminum foil) on the area of 1540.25 mm² are measured. A test method for gram capacity_{cathode} and gram capacity_{anode}: the gram capacity_{cathode} and gram capacity_{anode} can be obtained by first measuring the capacity of each electrode plate using the above positive electrode plate capacity test method and the negative electrode plate capacity test method and then dividing the obtained capacity by the mass of the positive or negative electrode active material in the electrode plate.

According to some embodiments of this application, the composition of the electrolyte is not particularly limited, for example, the electrolyte includes a first lithium salt, and the first lithium salt may be lithium bis(fluorosulfonyl)imide (LiFSI). Adding lithium bis(fluorosulfonyl)imide as the lithium salt in the electrolyte can increase the conductivity of the electrolyte and reduce the impedance of liquid phase transport of lithium ions, reducing overpotential caused by ohmic impedance during large-rate charging of the battery, thus improving the lithium precipitation window of the battery. In addition, lithium bis(fluorosulfonyl)imide has high chemical stability, which can effectively reduce side reactions in the lithium-ion battery during storage, improve the DCR (direct-current impedance) growth during the storage of the battery, and improve the overpotential caused by interface impedance during large-rate charging in long-term use of the lithium-ion battery, thereby effectively slowing down the deterioration progress of the lithium precipitation window during use of the lithium-ion battery. With the combination of the aforementioned potential range of the negative electrode of the lithium-ion battery charged to 80% SOC and the use of the lithium bis(fluorosulfonyl)imide as the lithium salt in the electrolyte, a synergistic effect of the two can be achieved, which significantly reduces the risk of lithium precipitation during large-rate charging of the battery. According to some other embodiments of this application, when the first lithium salt is lithium bis(fluorosulfonyl)imide, a mass percentage of the first lithium salt in the electrolyte may be 5wt% to 19wt%. When the mass percentage of the first lithium salt in the electrolyte is within the above range, the electrolyte has high ionic conductivity, and the ionic conductivity σ at 25°C being not less than 10 mS/cm helps to achieve fast transport of lithium ions. When the percentage of the first lithium salt in the electrolyte is too large, the viscosity of the electrolyte increases, leading to a decrease in the conductivity of the electrolyte and an increase in the impedance of liquid phase transport. When the percentage of the first lithium salt in the electrolyte is too small, the ionic conductivity of the electrolyte is improved slightly, failing to achieve an effect of improving the lithium precipitation window.

In this application, whether the words "approximately" or "about" are used or not, all numbers disclosed herein are approximate values. The value of each number may have less than 10% of variation or a variation that is considered to be reasonable by persons skilled in the art, for example, a variation of 1%, 2%, 3%, 4%, or 5%.

According to some embodiments of this application, the composition of the electrolyte is not particularly limited, for example, the electrolyte may further include a second lithium salt, and the second lithium salt may include at least one of lithium hexafluorophosphate (LiPF₆), lithium tetrafluoroborate, and lithium bis(difluorophosphonyl)imide. The use of the electrolyte including the first lithium salt and the second lithium salt can effectively prolong the service life of the lithium-ion battery and alleviate slight corrosion of the first lithium salt on a cathode current collector when the electrolyte includes only the first lithium salt. According to some other embodiments of this application, when the electrolyte includes both the first lithium salt and the second lithium salt, a total mass percentage of the first lithium salt and the second lithium salt in the electrolyte may be not greater than 30wt%, where a mass percentage of the first lithium salt in the electrolyte may be 5wt% to 19wt%, so that the lithium-ion battery can have both a good improvement effect and low manufacturing costs. According to some other embodiments of this application, a molar concentration ratio of the first lithium salt to the second lithium salt in the electrolyte may be (3:7) to (9:1), thereby further improving the cycling performance and service life of the lithium-ion battery.

In the description of this application, "a first feature" and "a second feature" may include one or more such features.

According to some embodiments of this application, the composition of the electrolyte is not particularly limited, for example, the electrolyte may further include an additive, and a mass percentage of the additive in the electrolyte may be not less than 10 ppm. The additive may include at least one of fluoroethylene carbonate, cyclic sulfate, cyclic sulfonate, (trimethylsilyl) phosphate, (trimethylsilyl) borate, trimethylfluorosilane, lithium difluorophosphate, and lithium difluoro(oxalato)phosphate, and the addition of the additive can effectively prolong the service life of the battery.

According to some embodiments of this application, the composition of the electrolyte is not particularly limited, and a solvent in the electrolyte may include at least one of cyclic carbonate, linear carbonate, and linear carboxylate, thereby increasing the solubility of the lithium salts and the conductivity of the electrolyte.

According to some embodiments of this application, referring to FIG. 1, the positive electrode may include a positive electrode current collector 11 and a positive electrode active material layer 12 located on at least one side surface of the positive electrode current collector 11, the positive electrode current collector 11 may include an aluminum foil, the positive electrode active material layer 12 may include a positive electrode active material, and the positive electrode active material may include at least one of lithium cobaltate, lithium manganate, lithium nickel cobalt manganate, lithium nickel cobalt aluminate, lithium manganese phosphate, lithium iron phosphate, and lithium-rich manganese-based solid solution. Preferably, the positive electrode active material may include lithium nickel cobalt manganate and/or lithium nickel cobalt aluminate, and the lithium nickel cobalt manganate may include at least one of the positive electrode active materials such as NCM111(LiNi_{1/3}Mn_{1/3}Co_{1/3}O₂), NCM523(LiNi_{0.5}Co_{0.2}Mn_{0.3}O₂), NCM622(LiNi_{0.6}Co_{0.2}Mn_{0.2}O₂), and NCM811(LiNi_{0.8}Co_{0.1}Mn_{0.}O₂).

According to some embodiments of this application, the positive electrode active material layer further includes a conductive agent, and a mass percentage of the conductive agent in the positive electrode active material layer is 0.5wt% to 6wt%. This can improve the conductivity of the positive electrode.

According to some embodiments of this application, referring to FIG. 1, the negative electrode may include a negative electrode current collector 21 and a negative electrode active material layer 22 located on at least one side surface of the negative electrode current collector 21, the negative electrode current collector 21 may include a copper foil, the negative electrode active material layer 22 may include a negative electrode active material, and the negative electrode active material includes at least one of graphite, soft carbon, hard carbon, carbon fiber, mesophase carbon microbeads, silicon-based materials, and tin-based materials.

According to some embodiments of this application, a type of the separator is not particularly limited, and any well-known porous structure separator with good chemical stability and mechanical stability can be selected. Specifically, a material of the separator may be selected from at least one of glass fiber, non-woven fabric, polyethylene, polypropylene, and polyvinylidene fluoride. The separator may be a single-layer thin film or a multi-layer composite thin film. When the separator is a multi-layer composite thin film, all its layers may be made of a same material or different materials, which can be selected by persons skilled in the art according to actual situations.

According to some embodiments of this application, the structure of the lithium-ion battery is not particularly limited. For example, the positive electrode, the negative electrode, and the separator may be made into an electrode assembly through winding or lamination.

According to another aspect, this application provides an electric apparatus, where the electric apparatus includes the foregoing lithium-ion battery. Therefore, the electric apparatus has all the features and advantages of the foregoing lithium-ion battery, which are not described herein again.

According to some embodiments of this application, the lithium-ion battery may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like.

According to some embodiments of this application, referring to FIG. 2, the electric apparatus may be a battery electric vehicle, a hybrid electric vehicle, a plug-in hybrid electric vehicle, or the like. To meet a requirement of the electric apparatus for high power and high energy density of a lithium-ion battery, a battery pack or a battery module may be used. Specifically, lithium-ion battery may be assembled into a battery module, and the battery module may include one or more lithium-ion batteries, which may be chosen by persons skilled in the art based on use and capacity of the battery module. The battery module may be further assembled into a battery pack, and the battery pack may include one or more battery modules. A specific quantity may be chosen by persons skilled in the art according to use and capacity of the battery pack.

### Examples

The solutions of this application are described in detail with reference to specific examples. It should be noted that the following examples are merely intended to illustrate this application rather than to limit the scope of this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

Details are shown in the following table. The positive electrode active materials are each a ternary material NCM111 (LiNi_{1/3}Mn_{1/3}Co_{1/3}O₂), the positive electrode current collectors are each an aluminum foil, the negative electrode active materials are each graphite, and the negative electrode current collectors are each a copper foil. The electrolyte includes a solvent, a lithium salt, and an additive, where the solvent includes ethylene carbonate (EC), dimethyl carbonate (DMC), and ethyl methyl carbonate (EMC), and a mass percentage ratio of EC, DMC, and EMC is 2:3:5. The additive in the electrolyte is 1wt% vinylene carbonate (VC), the first lithium salt is lithium bis(fluorosulfonyl)imide (LIFSI), and the second lithium salt is lithium hexafluorophosphate (LiPF₆). Specific percentages of the first lithium salt and the second lithium salt are shown in Table 1.

**Table 1**

| No. | Battery design | | Electrolyte | | CB value | Potential of negative electrode when battery is charged at 1C to 80% SOC (vs. Li⁺/Li) | Lithium precipitation level | |
|---|---|---|---|---|---|---|---|---|
| | Positive electrode active material | Negative electrode active material | LiFSI/LiPF₆ (molar concentration) | Mass percentage of first lithium salt (wt%) | | | Capacity retention rate after 1000 cls at -10°C, 80% SOC, and 15C/15C for 5s | Interface lithium precipitation level after disassembly |
| Example 1 | NCM111 | Graphite | 0.3/0.7 | 13 | 1.3 | 0.091 | 95% | + |
| Example 2 | NCM111 | Graphite | 0.6/0.4 | 14 | 1.3 | 0.093 | 96% | + |
| Example 3 | NCM111 | Graphite | 0.9/0.1 | 15 | 1.3 | 0.096 | 97% | No lithium precipitation |
| Example 4 | NCM111 | Graphite | 0.3/0.7 | 13 | 1.5 | 0.11 | 98% | No lithium precipitation |
| Example 5 | NCM111 | Graphite | 0.3/0.7 | 13 | 1.8 | 0.13 | 99% | No lithium precipitation |
| Example 6 | NCM111 | Graphite | 1/0 | 15 | 1.3 | 0.098 | 97% | No lithium precipitation |
| Example 7 | NCM111 | Graphite | 1.2/0 | 19 | 1.3 | 0.097 | 98% | No lithium precipitation |
| Example 8 | NCM111 | Graphite | 1/0 | 15 | 1.1 | 0.092 | 95% | + |
| Example 9 | NCM111 | Graphite | 1/0 | 15 | 1.5 | 0.11 | 98% | No lithium precipitation |
| Example 10 | NCM111 | Graphite | 1/0 | 15 | 1.8 | 0.13 | 99% | No lithium precipitation |
| Comparative example 1 | NCM111 | Graphite | 0/1 | 13 | 1.1 | 0.089 | 82% | +++ |
| Comparative example 2 | NCM111 | Graphite | 0/1 | 13 | 1.8 | 0.010 | 87% | ++ |
| Comparative example 3 | NCM111 | Graphite | 0.3/0.7 | 13 | 1.02 | 0.086 | 82% | ++++ |
| Comparative example 4 | NCM111 | Graphite | 0.3/0.7 | 13 | 1.9 | 0.014 | 89% | ++ |
| Comparative example 5 | NCM111 | Graphite | 0.2/0 | 3 | 1.3 | 0.072 | 21% | +++++ |
| Comparative example 6 | NCM111 | Graphite | 1.3/0 | 20 | 1.2 | 0.096 | 87% | +++ |

In a battery charging process, a method for testing the potential of the negative electrode included: the positive electrode plate and the negative electrode plate of the lithium-ion battery were taken to prepare a three-electrode battery with a reference electrode according to a preparation method of three-electrode battery, and then a potential of an anode was monitored using the reference electrode during charging and discharging of the battery, so as to measure the potential of the negative electrode when the battery was charged at 1C to 80% SOC. The preparation method of three-electrode battery was as follows: a positive electrode plate, a negative electrode plate, and a separator were punched and cut according to size requirements, with the positive electrode plate size being 42 mm*49 mm, the negative electrode plate size being 44 mm*51 mm, and the separator size being 46 mm*53 mm; then, the positive electrode plate, the separator, and the negative electrode plate were stacked in sequence; during stacking, a copper wire with a diameter of 200 micrometers was disposed between the positive and negative electrode plates; an electrode was led out from the copper wire and welded to a nickel sheet, serving as a third electrode (a reference electrode); after stacking, the stacked structure was placed into an aluminum-plastic film bag; then a specified amount of electrolyte was injected into the bag; and the bag was sealed, followed by standing, formation, and aging to obtain a three-electrode battery.

A method for testing the capacity retention rate of the battery included: after the foregoing battery was prepared, the following steps were performed in sequence at 25°C: (1) the battery was left standing for 5 min; (2) the battery was discharged at a constant current of 1C to 2.8 V; (3) the battery was left standing for 5 min; (4) the battery was charged at a constant current of 1C to an upper limit voltage and then charged at a constant voltage to 0.05C until the battery reached a fully charged state; (5) the battery was left standing for 5 min; and (6) the battery was discharged at a constant current of 1C to 2.7 V, and a discharge capacity in step (6) was recorded as the discharge capacity of the battery.

A method for testing the cycling performance included: first, the battery was adjusted to a 80% SOC state at 25°C according to a process as follows: (1) the battery was left standing for 5 min; (2) the battery was charged at a constant current of 1C to an upper limit voltage and then discharged at a constant voltage to 0.05C until the battery reached a fully charged state; (3) the battery was left standing for 5 min; (4) the battery was discharged at a constant current of 1C for 12 min, the battery reached the 80% SOC state at that point, and a corresponding battery voltage at that point was recorded as V₁, corresponding to the 80% SOC state. Then, the battery was placed at a temperature of -10°C and subjected to a cycling process: (1) the battery was left standing for 2 h; (2) the battery was charged at a constant current of 15C for 5s; (3) the battery rested for 10 min; (4) the battery was discharged at a constant current of 15C for 5s; and (5) the battery was left standing for 10 min, and then step (2) to step (5) of the cycling process are repeated 1000 cls. A method for calculating the capacity retention rate of the battery was as follows: before and after cycling of the battery, the capacities of the battery before and after cycling were measured using a capacity testing process including a cycling test under conditions of -10°C, 80% SOC, 15C/15C, and 5s, the capacity before cycling was recorded as Cap₁ and the capacity after cycling was recorded as Cap₂, and the capacity retention rate under the conditions of -10°C, 80% SOC, 15C/15C, 5s, and 1000 cls was equal to Cap₂/Cap₁.

A method for testing a lithium precipitation level on a battery interface included: the batteries of the foregoing examples and comparative examples were subjected to 1000 cycles under the conditions of -10°C, 15C/15C, and 5s, then the batteries were fully charged, then the fully charged batteries were disassembled, and negative electrode plates were obtained as samples to be tested.

The test results show that in Examples 1 to 10, the potentials of the negative electrodes of the batteries charged at 1C to 80% SOC are all between 0.09 V to 0.15 V; the capacity retention rates after the batteries are charged and discharged at -10°C and 5C/5C for 5s for 1000 cls are all greater than 90%; the lithium precipitation level on the interface is low; and the negative electrode active material layers on the surfaces of the disassembled negative electrode plates are still in the original color. In Comparative examples 1 to 6, the potentials of the negative electrodes of the batteries charged at 1C to 80% SOC are all less than 0.09 V; the capacity retention rates after the batteries are charged and discharged at -10°C and 5C/5C for 5s for 1000 cls are all less than 90%; significant lithium precipitation occurs on the interface; the safety and cycle life are poor, and with the increase in the lithium precipitation level; and it can be obviously seen that a large amount of silver precipitates occur on the surfaces of the negative electrode plates, and the overall negative electrode active material layers on the surfaces of the negative electrode plates are in a silver color.

In the description of this application, "A and/or B" may include any one of a case of only A, a case of only B, and a case of both A and B, where A and B are merely used as examples, and can be any technical feature connected by "and/or" in this application.

Unless otherwise specified, all scientific and technical terms used in this application have the same meanings as commonly understood by persons skilled in the art to which this application belongs. All patents and publications involved in this application are incorporated herein by reference in their entirety. The terms "comprise" or "include" is an open-ended expression, meaning that it includes the content specified in this application but do not exclude other aspects of content.

In the description of this specification, the description referring to the terms "an embodiment", "another embodiment", and the like mean that specific features, structures, materials or characteristics described with reference to this embodiment is included in at least one embodiment of this application. In this specification, the illustrative expressions of these terms do not necessarily refer to the same embodiment or example. In addition, the specific features, structures, materials or characteristics described can be combined in any appropriate manner in any one or more embodiments or examples. Besides, without mutual conflict, persons skilled in the art can incorporate and combine different embodiments or examples and features of the different embodiments or examples described in this specification. In addition, it should be noted that the terms "first" and "second" are merely for the purpose of description, and shall not be understood as any indication or implication of relative importance or any implicit indication of the number of technical features indicated.

Although the embodiments of this application have been shown and described, it can be understood that the foregoing embodiments are illustrative and should not be construed as limitations on this application. Persons of ordinary skill in the art can make changes, modifications, substitutions, and transformations to the foregoing embodiments within the scope of this application.

## Claims

1. A lithium-ion battery, comprising: a positive electrode plate, a negative electrode plate, a separator, and an electrolyte, wherein the separator is located between the positive electrode plate and the negative electrode plate; and
when the lithium-ion battery is charged at 1C to a state of charge of 80% SOC, a potential P_{anode} of the negative electrode satisfies: 0.09 V (vs. Li⁺/Li) < P_{anode} < 0.15 V (vs. Li⁺/Li).

2. The lithium-ion battery according to claim 1, wherein when the lithium-ion battery is charged at 1C to the state of charge of 80% SOC, the potential P_{anode} of the negative electrode satisfies: 0.09 V (vs. Li⁺/Li) < P_{anode} < 0.13 V (vs. Li⁺/Li).

3. The lithium-ion battery according to claim 1 or 2, wherein a CB value of the lithium-ion battery is 1.1 to 1.8, and optionally, the CB value of the lithium-ion battery is 1.3 to 1.5, wherein CB = negative electrode capacity/positive electrode capacity under same facing area.

4. The lithium-ion battery according to any one of claims 1 to 3, wherein the electrolyte comprises a first lithium salt, the first lithium salt is lithium bis(fluorosulfonyl)imide, and a mass percentage of the first lithium salt in the electrolyte is 5wt% to 19wt%.

5. The lithium-ion battery according to claim 4, wherein the electrolyte further comprises a second lithium salt, and the second lithium salt comprises at least one of lithium hexafluorophosphate, lithium tetrafluoroborate, and lithium bis(difluorophosphonyl)imide.

6. The lithium-ion battery according to claim 5, wherein a total mass percentage of the first lithium salt and the second lithium salt in the electrolyte is not greater than 30wt%.

7. The lithium-ion battery according to claim 5 or 6, wherein a molar concentration ratio of the first lithium salt to the second lithium salt in the electrolyte is (3:7) to (9:1).

8. The lithium-ion battery according to any one of claims 1 to 7, wherein the positive electrode plate comprises a positive electrode active material layer, the positive electrode active material layer comprises a positive electrode active material, and the positive electrode active material comprises at least one of lithium cobaltate, lithium manganate, lithium nickel cobalt manganate, lithium nickel cobalt aluminate, lithium manganese phosphate, lithium iron phosphate, and lithium-rich manganese-based solid solution.

9. The lithium-ion battery according to claim 8, wherein the positive electrode active material layer further comprises a conductive agent, and a mass percentage of the conductive agent in the positive electrode active material layer is 0.5wt% to 6wt%.

10. The lithium-ion battery according to any one of claims 1 to 9, wherein the negative electrode plate comprises a negative electrode active material layer, the negative electrode active material layer comprises a negative electrode active material, and the negative electrode active material comprises at least one of graphite, soft carbon, hard carbon, carbon fiber, mesophase carbon microbeads, silicon-based materials, and tin-based materials.

11. The lithium-ion battery according to any one of claims 1 to 10, wherein a solvent in the electrolyte comprises at least one of cyclic carbonate, linear carbonate, and linear carboxylate.

12. The lithium-ion battery according to any one of claims 1 to 11, wherein the electrolyte further comprises an additive, the additive comprises at least one of fluoroethylene carbonate, cyclic sulfate, cyclic sulfonate, (trimethylsilyl) phosphate, (trimethylsilyl) borate, trimethylfluorosilane, lithium difluorophosphate, and lithium difluoro(oxalato)phosphate, and a mass percentage of the additive in the electrolyte is not less than 10 ppm.

13. An electric apparatus, wherein the electric apparatus comprises the lithium-ion battery according to any one of claims 1 to 12.
